# EUROPEAN PATENT APPLICATION

(11) **EP 3 255 845 A1**
(43) Date of publication of application: **13.12.2017**
(21) Application number: 16173990.9
(22) Date of filing: 10.06.2016
(51) Int. Cl.: H04L 12/707, H04L 29/06

(54) **MULTIPATH TCP IN HYBRID ACCESS NETWORKS**

(71) Applicant: Tessares SA, 1348 Louvain-la-Neuve (BE)
(72) Inventor: BONAVENTURE, Olivier, 5030 Gembloux (BE); DETAL, Gregory, 1360 Thorembais-Saint-Trond (BE); BARRÉ, Sébastien, 5573 Martouzin-Neuville (BE); PEIRENS, Bart, 1030 Brussel (BE)
(74) Representative: Plas, Axel Ivo Michel

(57) **Abstract**

A method is disclosed for exchanging data over a TCP connection (234) between a client node (100) and a networking node (103). The TCP connection comprises a primary MPTCP subflow (122) between a customer premises equipment, a HCPE (101), and a hybrid access gateway, a HAG (102). The method comprises, by the HCPE, converting (410, 413) first TCP segments (401, 406) to first MPTCP segments (402, 405) of the primary MPTCP subflow and vice versa, and using destination address information of the first TCP segments as destination address information of the first MPTCP segments, and using source address information of the first MPTCP segment as source address information of the first TCP segments. The method further comprises, by the HAG, converting (411, 412) second TCP segments (403, 404) to second MPTCP segments (402, 405) of the primary subflow and vice versa while preserving source and destination address information.

## Description

### Field of the Invention

The present invention generally relates to field of network connectivity provided to clients by a hybrid access network. In such a hybrid access network, a client can access a server in an outside network such as the Internet by a Hybrid Customer Premises Equipment or HCPE that connects to a Hybrid Access Gateway or HAG over more than one access network.

More particularly, the invention relates to providing Multipath TCP capabilities between such a HCPE and HAG within a single path TCP connection between the client and server.

### Background of the Invention

A Customer Premises Equipment connects clients or local networks to an access network of an Internet Service Provider or ISP. The ISP then provides internet access to the clients by connecting the access network with the Internet through a gateway over the core network of the provider.

With the higher bandwidths provided by the latest wireless technologies such as for example LTE, Hybrid Customer Premises Equipments or HCPEs have been introduced providing network access over both wired and wireless technologies. In order to further boost the bandwidth for the user, ways of simultaneously using several access networks have been introduced. One of them is the use of the Multipath TCP (MPTCP) protocol that is specified by the IETF in RFC 6824. The protocol allows to establish a TCP connection between a client and server node. The connection then comprises several subflows, MPTCP subflows, over which the data is transferred.

However, a shortcoming of the protocol is that both endpoints, i.e., client and server must support MPTCP in order to make full use of it. Therefore, the protocol does not support the establishment of different subflows between intermediary nodes of a TCP connection, such as between the HCPE and the gateway over the different access networks.

In EP2882148 a solution is provided to tackle the above shortcoming and, thus, to provide multipath capabilities between a HCPE and a gateway. Both the HCPE and the gateway serve as an intermediate proxy between a client connecting to a server. When the client connects to the server, the HCPE will convert the TCP synchronization segment of the client to a MPTCP synchronization segment and address it to the gateway with the address of the server included in an optional field of the segment. The gateway on its turn converts the MPTCP segment back to a TCP segment and addresses it to the server. This way, a three way handshake is performed and a TCP connection between the client and the server is established.

A disadvantage of the above solution is that the server sees the gateway as the source of the connection and not the client or HCPE. The utilisation of the HAG and the HCPE is thus not transparent to the server. A further disadvantage is that the HCPE has to provide the address of the server as an optional field. This increases the size of the time critical synchronization segments and is further not optimal because the optional fields are limited in size. A further disadvantage is that traffic within the access network and core network of the ISP is addressed to the gateway and not to the server. This is problematic for legal reasons because ISPs can be obliged to keep track of the network activity and thus of the servers that a customer and thus a client is trying to reach. In order to do so, the ISP will have to link the intercepted traffic with information from the gateway. This is complex and thus costly.

It is an object of the present invention to overcome the above disadvantages and to provide a way to provide a transparent end-to-end TCP connection between a client and server while using multipath capabilities between the HCPE and a gateway.

### Summary of the Invention

This object is achieved, according to a first aspect, by a method for exchanging data over a TCP connection between a client node and a networking node. The TCP connection comprises a primary MPTCP subflow over a first access network between a hybrid customer premises equipment, an HCPE, serving as a first proxy node and a Hybrid Access Gateway, a HAG, serving as a second proxy node. The method comprises the following steps:
- converting, by the HCPE, first TCP segments to first MPTCP segments of the primary MPTCP subflow and vice versa; and
- using, by the HCPE, destination address information of the first TCP segments as destination address information of the first MPTCP segments; and
- using, by the HCPE, source address information of the first MPTCP segment as source address information of the first TCP segments; and
- converting, by the HAG, second TCP segments to second MPTCP segments of the primary subflow and vice versa while preserving source and destination address information.

The client is thus connected to the networking node, for example a server, through the HCPE and HAG. The HCPE provides the client access to more than one access network, for example a DSL and LTE network. The HAG on its turn serves as a gateway between the access networks and an outside network such as the Internet in which the networking node is located. In other words, the HAG sits in between the outside network and the HCPE. The TCP connection comprises a first single path portion between the client and HCPE, then a multipath portion between the HCPE and HAG and then again a single path portion between the HAG and the server. The multipath portion comprises the primary MPTCP subflow, i.e., the subflow that was setup first when establishing the MPTCP connection. The multipath portion may comprise one or more additional or auxiliary subflows between the HCPE and HAG established over other access networks. The TCP connection may be initiated from the client node or from the networking node.

TCP segments sent from the client to the networking node are intercepted by the HCPE that converts them to MPTCP segments. If the HCPE decides to send a segment over the primary subflow, it does not alter the destination address in the segment. Depending on whether the HCPE applies network address translation (NAT) or not, it may alter the source address information in the segment. Subsequently, the HAG will intercept the segment since all traffic towards the HCPE will pass by the HAG. The HAG then converts the MPTCP segment back to a TCP segment without altering the source or destination address information. This way the HAG and MPTCP portion is transparent to the networking node and the networking node believes that it receives single path TCP segments from the client or HCPE. The other way around, segments sent by the networking node to the client are intercepted by the HAG and converted to MPTCP segments. Again, if the HAG decides to send the segments over the primary MPTCP subflow, it does not alter the source or destination address of the segments. At the HCPE, the segment is converted to a TCP segment while preserving the source address and forwarded to the client. Depending on the NAT function at the HCPE the destination address may be translated to that of the client.

In other words, both the client and the networking node experience a single path TCP connection while multipath is supported for the connection between the HCPE and HAG. It is thus an advantage that the usage of multipath is transparent to both client and networking node. This also implies that network logging for legal purpose can be performed at any place before or after the HAG. Transparency is also advantageous for traffic engineering for IP sources and destinations, for Class of Service (CoS) marking, for traffic reporting by for example the Internet Protocol Flow Information Export (IPFIX) protocol or the sampled flow (sflow) protocol and for security applications such as for example Intrusion detection system (IDS) and Internet Provider Security (IPS) tags.Furthermore, it is an advantage that the address of the server can be provided in the destination field of the MPTCP segments and does not need to be provided in an optional field thereby enhancing protocol compatibility and reducing the size of the segments.

As the HCPE and the HAG maintain an MPTCP connection state, the TCP connection may further comprise an auxiliary MPTCP subflow over a second access network between the HCPE and the HAG. The method then further comprises:
- at the HCPE, converting third TCP segments to third MPTCP segments of the auxiliary MPTCP subflow and vice versa; and
- at the HAG, converting fourth TCP segments to fourth MPTCP segments of the auxiliary subflow and vice versa.

As provided by the MPTCP protocol, the HCPE or the HAG can then decide over which subflow to send the MPTCP segment based on current network performance or network policies. Similar to the primary subflow, both the HCPE and HAG perform a conversion between the TCP and MPTCP states and vice versa.

According to an embodiment, the converting then further comprises:
- by the HCPE, using destination address information of the HAG for the third MPTCP segments; and
- by the HAG, using destination address information of the networking node for the fourth segments sent to the networking node.

In order to route the segments differently for the auxiliary subflow, the HCPE now sends a MPTCP segment with the data of the TCP segment to the network address of the HAG in the second access network. This way the segments are routed over the auxiliary subflow to the HAG. At the HAG, the destination address is again replaced with that of the networking node.

Because all segments on the auxiliary subflow need to address the HAG directly, the network operator may use policies that prohibit the client or the HCPE to use the second access network to access the networking device directly. This way, the use of the second access network can be controlled in an easy and straightforward manner.

According to an embodiment, the method further comprises, in order to establish the auxiliary MPTCP subflow:
- sending, by the HAG for establishing the auxiliary MPTCP subflow, a segment comprising an address of the HAG in the second access network over the primary MPTCP subflow.

The HAG thus announces its address for establishing the auxiliary MPTCP subflow to the HCPE. This has the advantage that the HAG can, at any given time, determine when the HCPE, and thus the client, can use the auxiliary MPTCP subflow.

The HCPE may initiate the auxiliary subflow by sending a segment comprising a request to establish the second MPTCP subflow to the HAG. Alternatively, the HAG may initiate the auxiliary subflow by sending a segment comprising the request to establish the second MPTCP subflow to the HCPE. In this case it is not necessary to send the address of the HAG in the second access network over the primary MPTCP subflow if the HAG knows the alternate address of the HCPE.

Alternatively, both the primary and auxiliary MPTCP subflow may be established by:
- by the HAG, receiving a synchronization segment from the HCPE indicative for a request to establish the primary and auxiliary MPTCP subflows; and
- subsequently, by the HCPE, receiving a synchronization and acknowledgement segment from the HAG; and
- establishing, by the HCPE, the primary and the auxiliary MPTCP subflows; and
- receiving, by the HAG, an acknowledgment segment from the HCPE; and
- subsequently, by the HAG, establishing the primary and the auxiliary MPTCP subflows.

The primary and auxiliary MPTCP subflows are thus established at the HCPE side after the exchange of two messages, i.e., the initial synchronization segment and then the reception of the corresponding acknowledgment from the HAG. In other words, the HCPE establishes the primary and auxiliary TCP subflows based on the synchronization segment and the received acknowledgment. There is thus no further need for additional handshaking messages.

At the HAG side, the subflows are established after the exchange of the three messages, i.e., the initial synchronization segment, the acknowledgment together with synchronization segment from the HAG and then the acknowledgment from the HCPE.

It is thus an advantage that the two subflows can be established by a single three-way handshake. The number of segments exchanged and the establishment delay is thus independent of the number of auxiliary subflows. Furthermore, the same amount of TCP segments and MPTCP segments are exchanged. Both HCPE and HAG thus perform a one-to-one conversion of the segments during the establishment of the TCP connection.

Furthermore, the exchanged messages may be made backward compatible with segments used in the current MPTCP protocol, i.e., respectively the SYN segment with the MP_CAPABLE option, the SYN+ACK segment with the MP_CAPABLE option and the ACK segment containing the MP_CAPABLE option. While the message may be the same, the interpretation given to them by the client and server is different, and, therefore, the subflows are established by just a single three-way handshake.

According to a further embodiment the HAG comprises a plurality of gateway servers each acting as gateway between the first access network and the networking node; and wherein the method further comprises:
- by the HAG, load balancing the primary MPTCP subflow to one of the gateway servers.

As the HAG is a bottleneck to the outside network, the primary MPTCP subflows are load balanced over the different servers, i.e., all segments of a certain TCP connection are assigned to the same gateway server. As the auxiliary subflow is assigned a separate address, the load balancing of the auxiliary subflow may then be done by providing the HCPE with the network address of the gateway server to which the primary subflow is assigned.

According to a second aspect, the invention relates to a method for exchanging data over a TCP connection between a client node and a networking node; wherein the TCP connection comprises a primary MPTCP subflow over a first access network between a customer premises equipment, a HCPE, serving as a first proxy node and a hybrid access gateway, a HAG, serving as a second proxy node; the method comprising:
- by the HCPE:
   o converting first TCP segments to first MPTCP segments of the primary MPTCP subflow and vice versa; and
   o using destination address information of the first TCP segments as destination address information of the first MPTCP segments; and
   o using source address information of the first MPTCP segment as source address information of the first TCP segments.

According to a third aspect, the invention relates to a method for exchanging data over a TCP connection between a client node and a networking node; wherein the TCP connection comprises a primary MPTCP subflow over a first access network between a customer premises equipment, a HCPE, serving as a first proxy node and a hybrid access gateway, a HAG, serving as a second proxy node; the method comprising:
- by the HAG:
   o converting second TCP segments to second MPTCP segments of the primary subflow and vice versa while preserving source and destination address information.

According to a fourth aspect, the invention relates to a Hybrid Customer Premises Equipment, HCPE, configured to perform the steps performed by the HCPE according to the first and second aspect.

According to a fifth aspect, the invention relates to a Hybrid Access Gateway configured to perform the steps performed by the HAG according to the third aspect.

According to a sixth aspect, the invention relates to a system comprising the HCPE according to second aspect and the HAG according to the third aspect.

### Brief Description of the Drawings

Fig. 1 illustrates a client, a Hybrid Customer Premises Equipment, a Hybrid Access Gateway and a Server used for establishing a TCP connection according to an embodiment of the invention; and
Fig. 2 illustrates segments exchanged in order to establish a Multipath TCP connection according to an embodiment of the invention; and
Fig. 3 illustrates segments exchanged to establish an auxiliary subflow according to an embodiment of the invention; and
Fig. 4 illustrates segments exchanged over both the primary and auxiliary subflow of a Multipath TCP connection according to an embodiment of the invention; and
Fig. 5 illustrates a Hybrid Access Gateway according to an embodiment of the invention.
Fig. 6 illustrates a suitable computing system as a further embodiment of an Hybrid Customer Premises Equipment and/or an Hybrid Access Gateway according to an embodiment of the invention.

### Detailed Description of Embodiments

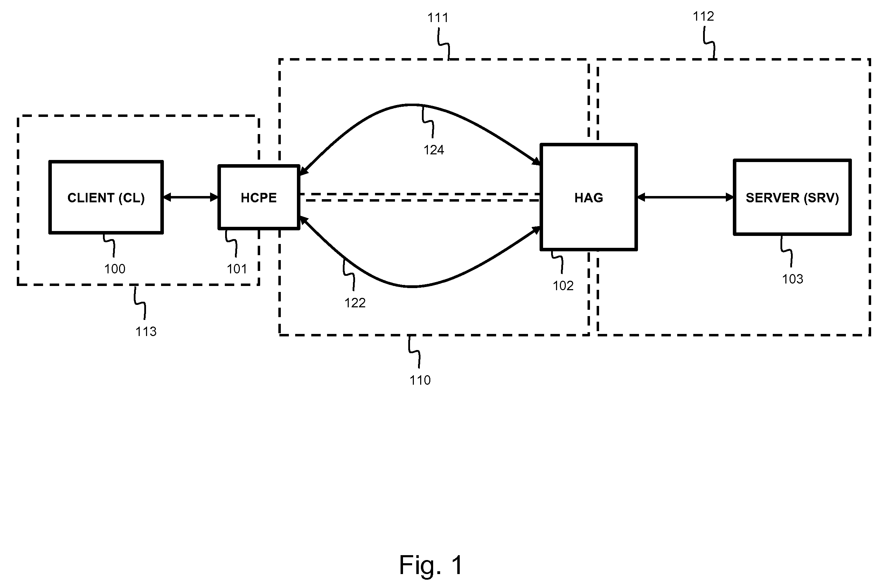

Fig. 1 illustrates a system for exchanging data over a TCP connection between a client 100 and a networking node 103 according to an embodiment of the invention. The TCP connection may be initiated by the client 100 in which case the node 103 acts as a server or vice versa. For the remainder of this description, the networking node 103 will be referred to as the server. The system further comprises a Hybrid Customer Premises Equipment 101, further referred to as HCPE. The HCPE 101 serves as a gateway for the client 100 and any other networking device within the local network 113. HCPE 101 provides the client access to the access networks 110, 111 of an Internet Service Provider (ISP). The system further comprises a Hybrid Access Gateway 102 allowing communication between the access networks 110, 111 and an outside network 112 such as for example the Internet. The server 103 resides in this outside network 112. Both the HCPE 101 and the HAG 102 are annotated as 'hybrid' because they are able to communicate with each other over more than one access network. An access network may be a wired access network such as for example an ADSL, ADSL2, VDSL, VDSL2, fibre or cable access network. In such a case the HCPE will have a wired communication interface. An access network may also be a wireless access network such as for example an LTE, Wi-Fi, satellite or any other wireless access network. In such a case, the HCPE will also comprise a wireless interface.

As will be described in the embodiments below, the client 100 can establish a TCP connection with the server 103, i.e., a connection wherein both the client 100 and the server 103 maintain TCP state information in order to maintain a reliable connection. When sending data over the TCP connection to the server, the client sends the TCP segments to the HCPE 101. The HCPE maintains both a TCP state and a Multipath TCP, MPTCP, connection state. The MPTCP protocol is an extension of the TCP protocol. A version of the protocol is published by the IETF in RFC 6824. The HCPE then converts the TCP segments to MPTCP segments and sends them over one of the access networks 110, 111 to the HAG 102. In order to do so, the HCPE maintains a primary MPTCP subflow 122 over the first access network 110 with the HAG 102 and an auxiliary MPTCP subflow 124 over the second access network 111 with the HAG 102. This way, the TCP connection may benefit from the aggregated bandwidth of the access networks 110 and 111. Also the HAG 102 maintains both a TCP and a MPTCP connection state. When the HAG receives the MPTCP segments from the HCPE, it converts the segments back to TCP segments and forwards them to the server 103. TCP segments from the server are sent in a similar way to the client 100.

For the addressing, the TCP port numbering scheme may be combined with the Internet Protocol, IP, addressing scheme which is commonly referred to as TCP/IP. The IP protocol may for example be IPv4 or the newer IPv6.

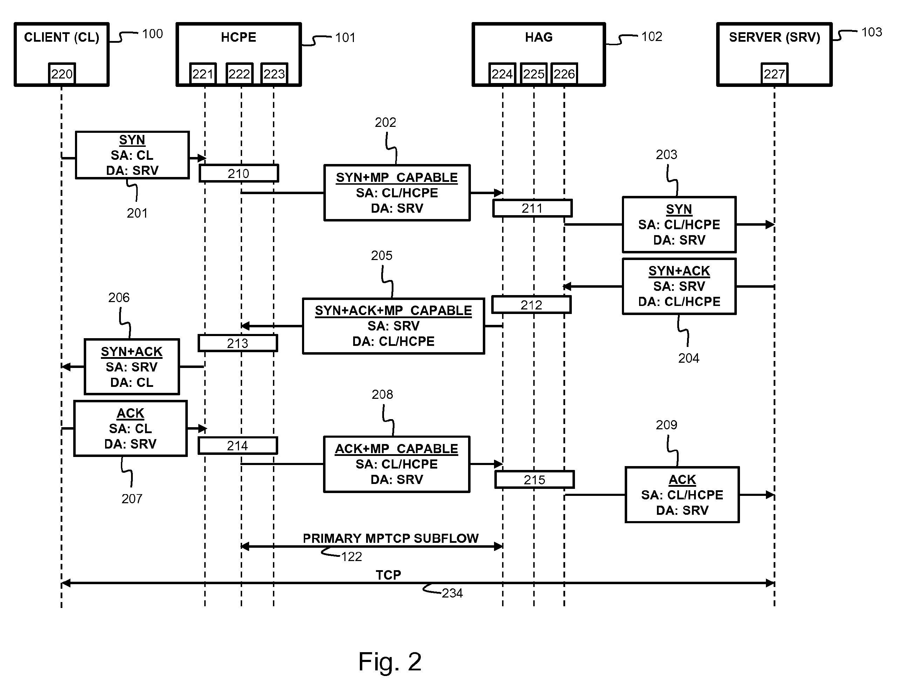

Fig. 2 illustrates the establishment of the TCP connection 234 between client 100 and server 103 according to an embodiment of the invention. In the example, the client initiates the connection, but the establishment may also be done by the node 103 in which case the client 100 acts as a serving node. The establishment is done by the exchange of TCP segments 201 to 209. In each segment in Fig. 2 to 4, the type of the segment is underlined followed by the source address denoted by 'SA' and the destination address denoted by 'DA'. For the addresses in the segments, 'CL' indicates the address of the client 100, 'SRV' indicates the address of the server 103, 'HCPE' indicates an address of the HCPE 101 and 'HAG' indicates an address of the HAG 102.

In a first step, the client transmits a TCP synchronization segment 201 or shortly SYN segment over its networking interface 220 to the server 103 by adding the network address assigned to the networking interface 227 of the server in the destination address field of the synchronization segment 201. As the HCPE serves as a gateway for the client 100, the segment will be received at the networking interface 221 of the HCPE 101.

The HCPE comprises two outside network interfaces 222 and 223 connecting the HCPE to respectively the first and second access network 110 and 111. Then, in step 210, the HCPE 101 converts the received SYN segment 201 to a SYN segment 202 that indicates Multipath capabilities, i.e., a SYN segment containing the MP_CAPABLE option. Depending whether the HCPE implements network address translation, NAT, the HCPE may replace the source address of the segment 201 with the address of the HCPE, i.e., with the address assigned to interface 222. NAT may for example be performed when using IPv4 while it is normally not necessary when using IPv6. In either case, the HCPE 101 does not alter the destination address during the conversion step 210.

In a next step, the HCPE 101 then transmits the segment 202 over its first networking interface 222 and thus over the primary subflow 122 to the server. As the HAG acts as a gateway for the first access network to the network in which the server resides, the segment 202 will be routed towards the network interface 224 of the HAG and thus received by the HAG 102. Then, in step 211, the HAG converts the MPTCP segment 202 back to a TCP segment 203 by removing the MP_CAPABLE option. During the conversion, the HAG does not alter the source or destination address of the segment. The HAG then forwards the converted segment.

When the server 103 receives the SYN segment, it appears as if the client 100 or HCPE 101 attempts to establish a single path TCP connection with the server. If there is no NAT applied, both the HCPE 101 and the HAG 102 remain completely transparent to the server. In return, the server 103 replies to the client 100 or HCPE 101 by a synchronization and acknowledgment segment 204, a SYN+ACK.

This segment 204 is again intercepted by the HAG 102 serving as gateway towards the HCPE 101 and the client 100. In step 212, the HAG performs a similar conversion of the segment 204 as in step 211, but now adds the multipath capability option, commonly referred to as MP_CAPABLE. Again, both source and destination addresses remain unchanged.

As the HCPE serves as a gateway to the client for segments from the HAG, the converted segment 205 will be received at the HCPE 101. In step 213, the HCPE removes the MP_CAPABLE option and thus converts the MPTCP segment 205 to a TCP segment 206. Dependent on whether NAT is performed, the source address may be changed to that of the client 100.

In a similar way as for the SYN segments 201-203, the client now acknowledges the TCP connection by segment 207. This segment is again converted 214 by the HCPE to an ACK+MP_CAPABLE segment 208 and converted 215 back to a regular ACK segment 209 by the HAG 102. When ACK segment 209 is received by the server 103, the TCP connection 234 is considered established at both the client 100 and the server 103 by the three-way handshake. Between the HCPE and HAG, the connection will be treated as the primary subflow 122 of a MPTCP connection.

Together with the establishment of the TCP connection 234 or any time thereafter, a second subflow may be established between the HCPE 101 and the HAG 102

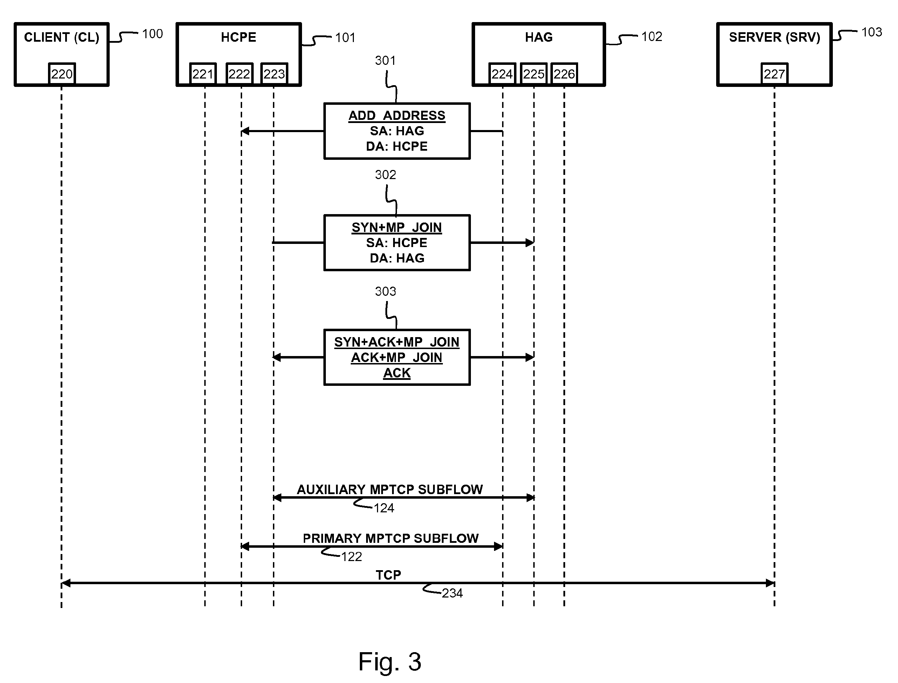

Fig. 3 illustrates steps performed by the HCPE and HAG to establish the second subflow 124 according to an embodiment of the invention. The steps performed are in line with the MPTCP protocol for establishing an auxiliary subflow. After the establishment of the first subflow 122, the HA sends an MPTCP segment 301 containing the ADD_ADDRESS option to the CPE wherein the network address of interface 225 of the HAG over the second access network 111 is announced. Thereafter, the HCPE and HAG exchange further segments such as the SYN+MP_JOIN segment 302 and SYN+ACK+MP_JOIN segment 303 in order to establish the second MPTCP subflow 124. For the exchange of MPTCP segments the HCPE will use the second network interface 223 and thus the second access network.

In order to exchange data over the two subflows 122, 124, both the HCPE 101 and HAG 102 keep track of the MPTCP state, i.e., manage the MPTCP Data Sequence Numbers, DSNs, as defined by the MPTCP protocol.

According to an alternative embodiment, the second subflow 124 may also be established implicitly during the establishment of the first subflow. This way the extra network traffic and time delay caused by the exchange of segments 301-303 can be avoided. This implicit establishing is possible because the HCPE 101 is known to the HAG 102 as they are both part of the same subscriber network, e.g. the same ISP. The alternative embodiment will now be described with reference to Fig. 2.

When the HAG has received the first SYN+MP_CAPABLE segment 202, the HAG will also obtain the addressing information of the HCPE's second networking interface 223. How this address information may be obtained is explained further below.

The reception of segment 202 is interpreted by the HAG 102 as a request to setup both the first and auxiliary MPTCP subflows 122 and 124. It is thus not only an indication that the HCPE 101 supports Multipath TCP. This request may be directly included in the first segment 202. Alternatively, the request may also be done indirectly, for example by a predefined setting in the server that segments 202 should always be considered as such a request. This way, no further information must be present in the segment 202. The HCPE 101 may also alter or set such a setting through an out-of-band connection or channel between the HCPE 101 and the HAG 102.

When the request is included in segment 202, this may be done in several ways. One way is to define a new TCP option that includes such a request. Another possibility is to place the request inside the payload of the SYN segment 202. Yet another possibility is to place the request inside an option in the network packet, i.e., as an IP option. This is especially advantageous in IPv6 where there is no strict limit on the length of such an option and thus on the length of the request.

When the HCPE receives the SYN+ACK+MP_CAPABLE segment 205, it interprets it as a confirmation that the HAG 102 is ready for communication over the two subflows 122 and 124.

Thereafter, the HCPE 101 confirms the establishment of the first and second subflow with the ACK+MP_CAPABLE segment 208 to the HAG. Upon reception, the HAG 102 has confirmation that the HCPE 101 has established both subflows 122, 124 and also establishes the first and auxiliary subflows 122, 124.

Obtaining the address information of the HCPE 101 for the second subflow by the HAG 102 may be performed in several ways as described below.

In a first way of performing the addressing information is comprised in the SYN+MP_CAPABLE segment 202 and the HAG 102 then retrieves this information from segment 202. According to a first example a new TCP option is defined that includes this addressing information. According to a second example the addressing information is embedded as payload data in the SYN segment 202. According to a third example, the addressing information is embedded as an option in the network packet, i.e., as an IP option. This is especially advantageous in IPv6 where there is no strict limit on the length of such an option and thus on the length of the addressing information. The embedding of the addressing information may further be combined with the embedding of the request as outlined above. Preferably the addressing information is provided such that backwards compatibility with the MPTCP protocol is guaranteed.

In a second way for obtaining the addressing information is by using an out-of-band communication mechanism or channel, i.e., by communication between the HCPE 101 and HAG 102 outside of the MPTCP subflows. For example, a separate connection may exist between HCPE 101 and HAG 102 to exchange further information about the subflows. Such a connection may be used by management applications running on both the HCPE 101 and HAG 102 that manage the establishment of the multipath subflows.

In a third way, the addressing information is independently derived by the HAG 102 by a predefined logical relationship, i.e., according to a predefined rule indicating how the addressing information can be derived. Some examples of such a rules are:
- There is a mathematical relationship between the network address and/or port of the HCPE 101 for the two subflows. For example, the network address and/or port for the auxiliary subflow may be obtained by incrementing the network address and/or port used for the first subflow.
- The addressing information is identical as used for previous subflows established with the HCPE.
- The HAG has access to a database that lists all the addresses of all the HCPEs.

The HAG 102 and HCPE 101 may also support connection establishment coming from the outside network, i.e., when server 103 initiates the establishment of TCP connection 234 with client 100.

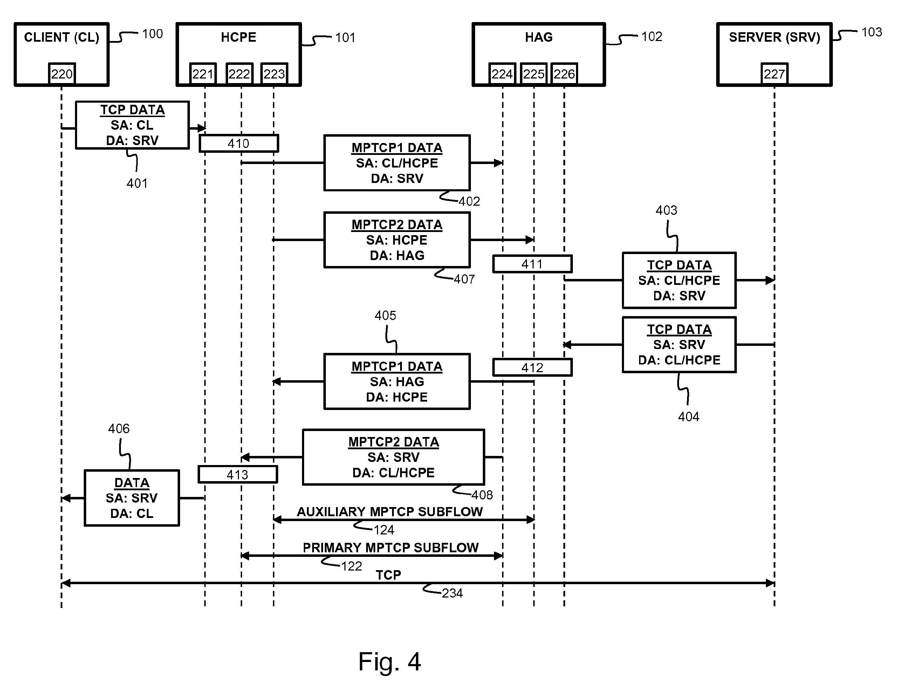

When the TCP connection 234 is established according to one of the above embodiments, data segments may be exchanged between client 100 and server 103. Fig. 4 illustrates how segments 401 to 408 are converted by the HCPE 101 and the HAG 102 in order to use the two subflows 122, 124 while preserving transparency to both client 100 and server 103.

When a TCP segment 401 is sent from client 100 to server 103 along the primary subflow 122, the segment 401 will be intercepted at the HCPE, and transmitted as an MPTCP segment 402 over the first or primary subflow to the server 103. During this conversion step 410, the destination address information is preserved. The source address information may be changed to that of the interface 222 when NAT is applied by the HCPE. The MPTCP segment 402 will on its turn be intercepted by the HAG and converted back the TCP data segment 403. During the conversion step 411, source and destination address information is preserved by the HAG. Finally, segment 403 will arrive at the server 103 as a single path TCP segment originating from the client 100 or HCPE 101.

The conversion in the opposite direction from server 103 to client 100 over the first MPTCP subflow 122 is performed in a similar fashion. A TCP segment 404 originating from the server 103 will be intercepted by the HAG 102 and converted to MPTCP segment 405. During the conversion step 412 source and destination address information is preserved. Segment 405 will on its turn be received or intercepted by the HCPE. At the HCPE, the segment 405 is converted to TCP segment 406. During this conversion step 413 the source address information is preserved. The destination address information may be changed depending on whether NAT is applied by the HCPE. The client 100 then receives the single path TCP segment 406 in a transparent way, i.e., as if it was coming from server 103.

When the TCP segment 401 is sent from client 100 to server 103 along the auxiliary subflow 124, the segment 401 will again be intercepted at the HCPE 101 and transmitted as MPTCP segment 407 over the second or auxiliary subflow to the server 103. During this conversion step 410, the destination address information is replaced by the address information of the HAG 102, i.e., the address assigned to the network interface 225 of the HAG. During the same step 410, the source address information is changed to that of the interface 223. The segment 407 is then forwarded over the second access network 111 to the HAG. As the MPTCP segment 407 is addressed to the HAG, the segment 407 will be routed to the HAG's network interface 225. As the auxiliary subflow 124 is linked with the primary subflow 122, the HAG will identify the segment 407 as belonging to the TCP connection 234. Therefore, the HAG converts the segment, during conversion step 411 to TCP segment 403 and replaces the destination address with that of the server. If NAT is not applied at the HCPE, the source address is replaced with that of the client 100, otherwise with the address assigned to the interface 222 of the HCPE, i.e., the interface used for the primary subflow 122.

The conversion in the opposite direction from server 103 to client 100 over the auxiliary MPTCP subflow 124 is performed in a similar fashion. TCP segment 404 originating from the server 103 will be intercepted by the HAG 102 and converted to MPTCP segment 408, i.e., a MPTCP segment for the auxiliary MPTCP subflow 124. During the conversion step 412 the source address of the server is replaced with the source address of the HAG, i.e., the address assigned to network interface 224 of the HAG. The destination address is replaced with that of the HCPE 101, i.e., the network address of the HCPE's network interface 223 on the second access network 111.

The segment will then be routed along the second access network 111 to the HCPE 101. At the HCPE 101, the segment 408 at interface 223. As the HCPE keeps an MPTCP state, it derives that segment 408 belongs to TCP connection 234. Therefore, subsequently, during conversion step 413 segment 408 is converted to segment 406. In step 413 the source address of the HAG is replaced with the address of the server and the destination address is replaced with the address of the client. Finally, the segment 406 arrives at the client 100.

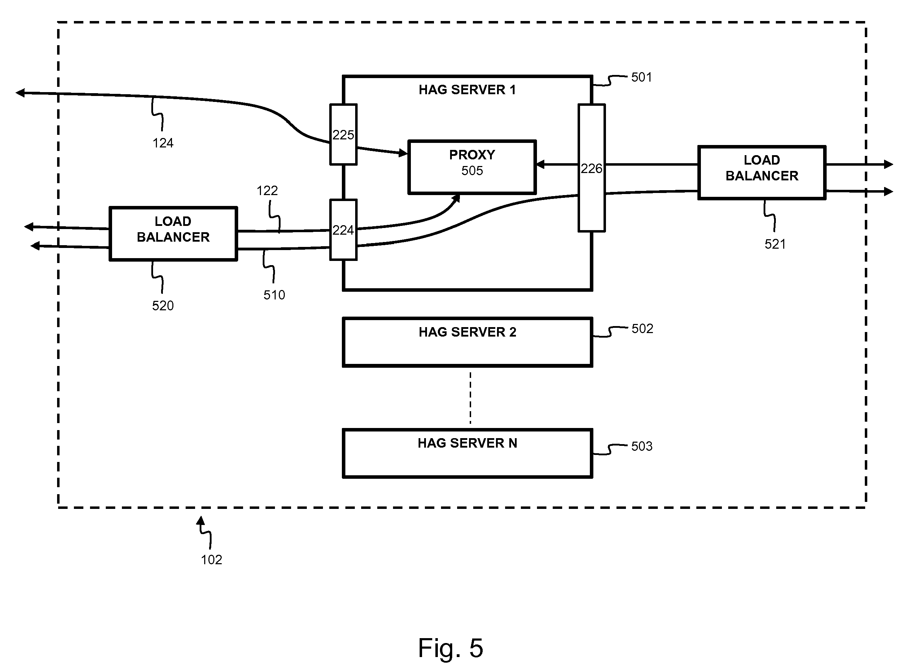

Fig. 5 illustrates the layout of the HAG according to an embodiment of the invention. The HAG 102 comprises a server 501 comprising proxy logic 505 to perform the conversion steps as explained with respect to the previous embodiments. Segments received over the primary MPTCP subflow 122 and auxiliary MPTCP subflow 124 are converted by the proxy logic 505 to TCP segments and vice versa.

Also other data packets 510 may be received at networking interface 224 such as for example packets according to the other networking protocols including UDP or ICMP. These packets will not be converted by the proxy logic, but are directly forwarded to the outside network over networking interface 226. This way, the MPTCP functionality in the HCPE and HAG 102 remains also completely transparent to other protocols.

The HAG 102 may further comprise a plurality of HAG servers 501 to 503 in order to load balance the data traffic. To this respect the HAG 102 also comprises load balancers 520 and 521. Load balancer 520 balances the packets coming from different HCPEs to one of the HAG servers 501-503. Load balancer 521 balances the packets coming from the outside network to one of the HAG servers 501-503. Several policies may be implemented in the load balancer such as for example:
- Load balance per MPTCP flow, i.e., per newly established TCP connection between a client and server.
- Load balance per HCPE, i.e., every HCPE is assigned a single HAG server for all its connections. This may be performed by checking the source IP address of the packets received over the primary interface 224.
- Load balancing per source prefix. This way a cluster of HCPEs is assigned to a single HAG server.
The above load-balancing mechanisms ensure that both HCPE-side and outside network-side load-balancers 520 and 521 consistently route packets of a given flow to the same proxy. This also ensures that the load balancing decision is not changed for an ongoing flow, i.e., for an ongoing TCP connection between client and server.

During operation, i.e., when Multipath TCP operates over both the primary and auxiliary subflows, the situation may arise that the networking address assigned to network interface 222 for the primary MPTCP subflow 122 becomes unavailable, e.g. by an interface reset, while the existing auxiliary subflow 124 is still in place. In such a case the HCPE 101 may advertise a REMOVE_ADDR option in a segment to the HAG 102 over the still active slave subflow 124, i.e., it advertises that the used networking address is no longer valid. This then triggers a clean-up of the MPTCP state at the HAG 102 for any subflow attached to this address. This closing of connections that lose their primary subflow is necessary because the address could become assigned to another HCPE during the lifetime of the MPTCP session. The common address could then be used simultaneously by two different users which may result in errors on the network.

Therefore, the HAG 102 may terminate the TCP connection 234 if the network address used for the primary subflow is lost, and, subsequently, release all associated resources. This may be done by the following steps:
- The HAG receives a segment from the HCPE 101 with the REMOVE_ADDR option indicative that the networking address used for the primary subflow is lost.
- Thereupon, the HAG 102 resets the HAG resets the TCP connection 234 to the server.
- The HAG 102 sends a segment with the TCP option MP_FASTCLOSE to the HCPE 101.
- Upon reception, the HCPE 101 resets the TCP connection 234 towards the client 100.

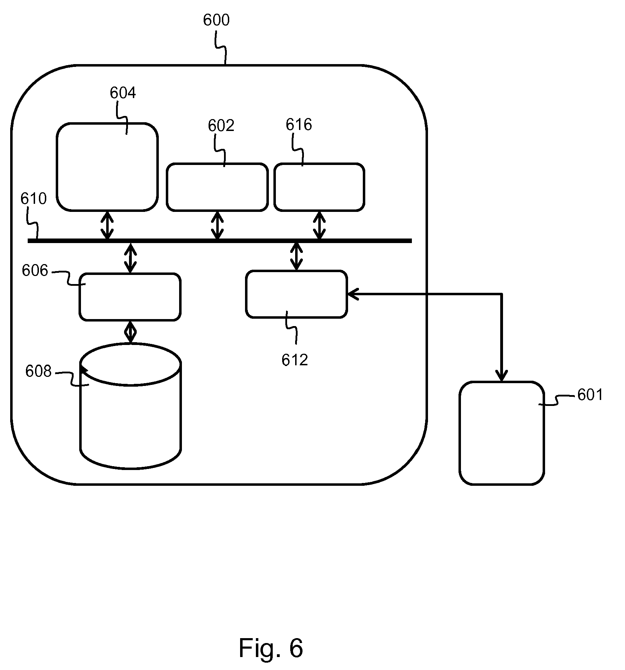

Fig. 6 shows a suitable computing system 600 as a further embodiment of the HCPE 101 or HAG 102. Computing system 600 may in general be formed as a suitable general purpose computer and comprise a bus 610, a processor 602, a local memory 604, one or more optional output interfaces 616, a communication interface 612, a storage element interface 606 and one or more storage elements 608. Bus 610 may comprise one or more conductors that permit communication among the components of the computing system 600. Processor 602 may include any type of conventional processor or microprocessor that interprets and executes programming instructions. Local memory 604 may include a random access memory (RAM) or another type of dynamic storage device that stores information and instructions for execution by processor 602 and/or a read only memory (ROM) or another type of static storage device that stores static information and instructions for use by processor 602. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage elements 608 above is described as a local disk, in general any other suitable computer-readable media such as a solid state drive or flash memory cards could be used. The system 600 described above can also run as a Virtual Machine above the physical hardware. The steps performed on the HCPE and HAG devices according to the above embodiments may be partly or completely implemented as programming instructions to be run on processor 602. Communication interface 612 may further correspond to the HCPE's or HAG's networking interfaces 221, 222, 223, 224, 225, 266..

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Method for exchanging data over a TCP connection (234) between a client node (100) and a networking node (103); wherein the TCP connection comprises a primary MPTCP subflow (122) over a first access network (110) between a customer premises equipment, a HCPE (101), serving as a first proxy node and a hybrid access gateway, a HAG (102), serving as a second proxy node; the method comprising:
- by the HCPE:
o converting (210, 213, 214) first TCP segments (201, 206, 207) to first MPTCP segments (202, 205, 208) of the primary MPTCP subflow and vice versa; and
o using destination address information of the first TCP segments (201, 207) as destination address information of the first MPTCP segments (202, 208); and
o using source address information of the first MPTCP segment as source address information of the first TCP segments; and
- by the HAG:
o converting (211, 212, 215, 217) second TCP segments to second MPTCP segments of the primary subflow and vice versa while preserving source and destination address information.

2. Method according to claim 1 wherein the TCP connection (234) comprises an auxiliary MPTCP subflow over a second access network between the HCPE (101) and the HAG (102); the method further comprising:
- at the HCPE, converting third TCP segments to third MPTCP segments of the auxiliary MPTCP subflow and vice versa; and
- at the HAG, converting fourth TCP segments to fourth MPTCP segments of the auxiliary subflow and vice versa.

3. Method according to claim 2 further comprising:
- by the HCPE, using destination address information of the HAG for the third MPTCP segments; and
- by the HAG, using destination address information of the networking node for the fourth segments sent to the networking node.

4. Method according to claim 2 or 3 further comprising, for establishing the auxiliary MPTCP subflow:
- sending, by the HAG for establishing the auxiliary MPTCP subflow, a segment comprising an address of the HAG in the second access network over the primary MPTCP subflow.

5. Method according to any one of claims 2 to 4 further comprising:
- sending, by the HCPE, a segment comprising a request to establish the second MPTCP subflow to the HAG.

6. Method according to any one of claims 2 to 4 further comprising:
- sending, by the HAG, a segment comprising a request to establish the second MPTCP subflow to the HCPE.

7. Method according to claim 2 or 3 comprising, for establishing the primary and auxiliary MPTCP subflow:
- by the HAG, receiving a synchronization segment from the HCPE indicative for a request to establish the primary and auxiliary MPTCP subflows; and
- subsequently, by the HCPE, receiving a synchronization and acknowledgement segment from the HAG; and
- establishing, by the HCPE, the primary and the auxiliary MPTCP subflows; and
- receiving, by the HAG, an acknowledgment segment from the HCPE; and
- subsequently, by the HAG, establishing the primary and the auxiliary MPTCP subflows.

8. Method according to any one of the preceding claims wherein the HAG comprises a plurality of gateway servers each acting as gateway between the first access network and the networking node; and wherein the method further comprises:
- by the HAG, load balancing the primary MPTCP subflow to one of the gateway servers.

9. Method for exchanging data over a TCP connection (234) between a client node (100) and a networking node (103); wherein the TCP connection comprises a primary MPTCP subflow (122) over a first access network (110) between a customer premises equipment, a HCPE (101), serving as a first proxy node and a hybrid access gateway, a HAG (102), serving as a second proxy node; the method comprising:
- by the HCPE:
o converting (210, 213, 214) first TCP segments (201, 206, 207) to first MPTCP segments (202, 205, 208) of the primary MPTCP subflow and vice versa; and
o using destination address information of the first TCP segments (201, 207) as destination address information of the first MPTCP segments (202, 208); and
o using source address information of the first MPTCP segment as source address information of the first TCP segments.

10. Method for exchanging data over a TCP connection (234) between a client node (100) and a networking node (103); wherein the TCP connection comprises a primary MPTCP subflow (122) over a first access network (110) between a customer premises equipment, a HCPE (101), serving as a first proxy node and a hybrid access gateway, a HAG (102), serving as a second proxy node; the method comprising:
- by the HAG:
o converting (211, 212, 215, 217) second TCP segments to second MPTCP segments of the primary subflow and vice versa while preserving source and destination address information.

11. Hybrid Customer Premises Equipment, HCPE (101), configured to perform the steps performed by the HCPE according to any one of the claims 1 to 9.

12. Hybrid Access Gateway (102) configured to perform the steps performed by the HAG (102) according to any one of the claims 1 to 8 or 10.

13. System comprising the HCPE (101) according to claim 11 and the HAG (102) according to claim 12.
